**Europäisches Patentamt**

**European Patent Office**

**Office européen des brevets**

(19)

(11) Publication number : **0 457 743 A1**

# (12) EUROPEAN PATENT APPLICATION

(21) Application number : **91850120.6**

(51) Int. Cl.⁵ : **B60K 23/04**

(22) Date of filing : **10.05.91**

(30) Priority : **14.05.90 FI 902398**

(43) Date of publication of application :
**21.11.91 Bulletin 91/47**

(84) Designated Contracting States :
**DE DK ES FR GB IT SE**

(71) Applicant : **Valmet Oy**
**Punanotkonkatu 2**
**SF-00130 Helsinki 13 (FI)**

(72) Inventor : **Huuskonen, Pekka**
**Lehdonmutka 4**
**SF-40420 Jyskä (FI)**

(74) Representative : **Wallin, Bo-Göran et al**
**AWAPATENT AB Box 5117**
**S-200 71 Malmö (SE)**

(54) **Method and control system for switching on/off of the differential lock of a tractor or of a corresponding working machine.**

(57)    The invention concerns a method for switching on/off of the differential lock of a tractor or of a corresponding working machine in a tractor or equivalent in which at least the rear axle is arranged as a driving axle and is provided with a differential lock (14) installed in the differential gear (6). The driving axle is operated by the engine (1) of the tractor or equivalent through a driving clutch (2) and a gearbox (4). In the method, the mutual difference in the speeds of rotation of the rear wheels (10) of the tractor or equivalent, the factual travel speed of the tractor, and the turning angle of the steering wheels are measured constantly. The measured values are compared with the values programmed in advance in a microprocessor-type central unit included in the control system, whereby, when the measured values are in a certain relationship to the pre-programmed values, the differential lock (14) is switched on/off automatically. The invention also concerns a control system that makes use of the method.

EP 0 457 743 A1

EP 0 457 743 A1

The invention concerns a method for switching on/off of the differential lock of a tractor or of a corresponding working machine in a tractor or equivalent in which at least the rear axle is arranged as a driving axle and is provided with a differential lock installed in the differential gear, said driving axle being operated by the engine of the tractor or equivalent through a driving clutch and a gearbox.

The invention further concerns a control system for switching on/off of the differential lock of a tractor or of a corresponding working machine in a tractor or equivalent in which at least the rear axle is a driving axle and provided with a differential lock installed in connection with the differential gear, said driving axle being operated by the engine of the tractor through a driving clutch and a gearbox.

In tractors, and in particular in farm tractors, the conventional power transmission construction has been accomplished so that in the transmission the power is transferred to the rear wheels permanently through the differential gear. The differential gear permits different rates of rotation of the wheels placed at opposite ends of the axle, e.g., when driving in a curve. Owing to the principle of operation of the differential gear, the sum of the speeds of rotation of the wheels placed at opposite ends of the axle is always the same, being equal to twice the speed provided by the input shaft of the differential gear. Thus, if the speed of rotation of one of the wheels becomes slower, the speed of rotation of the other wheel is increased to a corresponding extent. On the other hand, if the speed of rotation of one of the wheels is twice as high as the speed of rotation provided by the input shaft, the result is that the other wheel stops completely. This again has the consequence that the tractor stops completely if the wheel at either side loses its grip.

Owing to the above, in connection with the differential in tractors, a differential lock is always provided, which forces the wheels at both sides to revolve at the same rate. Owing to this procedure, the tractor cannot become immobile just because the wheel at one side loses its grip. It is a substantial drawback of a differential lock that it is very difficult to steer a tractor when the lock has been switched on for, when driving in a curve, the distance covered by the wheels is always different at different ends of the axle. Also, when the brakes are applied in order to steer the tractor, an extra strain is produced on the transmission system unless the lock is switched off. The same applies to driving in a curve, in which case the wheels placed at different ends of the axle travel distances of different lengths. Also, in view of the efficiency of the tractor, the differential lock should not be allowed to remain switched on except when it is necessary.

The switching on/off of the differential lock can be carried out by means of a mechanical system, by means of a hydraulic multi-disk clutch, or by means of some other, corresponding system. A mechanical operating switch of a differential lock is often difficult to use, for which reason increasing use is being made of a differential lock operated by means of a hydraulic multi-disk clutch. A differential lock that is switched on/off hydraulically can be controlled by means of an electrically controlled solenoid valve, in which case the operation itself is controlled simply, e.g., by means of a press knob or an equivalent switch. If both the front axle and the rear axle of the tractor are provided with similar differential locks which are switched on/off hydraulically, they are usually arranged so as always to be switched on and off at the same time.

Even though the switching on/off has become easier, however, the driving often takes place with the differential lock switched on even if the lock were not needed for the work. Also, when the tractor is at work on a field, it would be preferable to switch off the differential lock when it is not needed. In operation on the road, the differential lock cannot be used out of reasons of safety, and the lock is not even needed when driving on the road.

The object of the present invention is to provide a method and a control system by whose means the switching on/off of the differential lock can be made automatic and by whose means substantially all of the drawbacks involved in the prior-art solutions are avoided. In view of achieving this, the method in accordance with the invention is mainly characterized in that, in the method, the mutual difference in the speeds of rotation of the rear wheels of the tractor or equivalent, the factual travel speed of the tractor, and the turning angle of the steering wheels are measured constantly, and the measured values are compared with the values programmed in advance in a microprocessor-type central unit included in the control system, whereby, when the measured values are in a certain relationship to the pre-programmed values, the differential lock is switched on/off automatically.

On the other hand, the control system in accordance with the invention is mainly characterized in that the control system is provided with a programmable central unit as well as with detectors which measure the speeds of at least one driving wheel and the gearbox as well as the factual travel speed and the turning angle of the steering wheels, said detectors being arranged to feed the signals corresponding to the measured values to the central unit to compare said values with the pre-programmed values, and the central unit being arranged to switch on/off the differential lock when the measured values are in a predetermined relationship to the programmed values.

By means of the invention, compared with the prior art, a number of remarkable advantages are obtained, whereof, e.g., the following should be mentioned in this connection. The method in accordance with the invention and the control system that makes use of the method keep the differential lock in engagement only when it is necessary, thereby optimizing the efficiently and the operability of the transmission. In the invention, the switching on/off has been made fully automatic, so that the driver need not worry about the switching on/off at all. If necessary, the control system can be fitted to switch the differential locks of the front axle and of the rear axle on and off at the same time. The other advantages and characteristic features of the invention come out from the following detailed description of the invention.

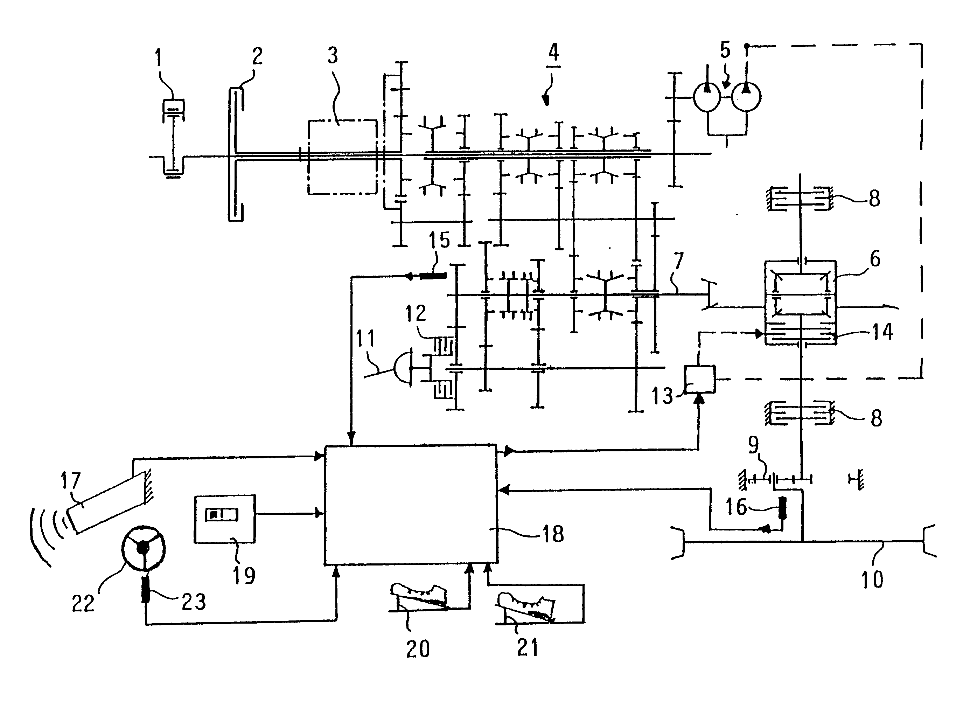

In the following, the invention will be described by way of example with reference to the figure in the accompanying drawing. The only figure in the drawing is a fully schematic presentation of the power transmission system of a tractor or equivalent, wherein the method in accordance with the invention and the control system that makes use of the method are applied.

In the figure, the engine of the tractor is denoted schematically with the reference numeral 1, the driving clutch with the reference numeral 2, the gearbox with the reference numeral 4, and the hydraulic pump with the reference numeral 5. In the figure, it is shown further that, between the driving clutch 2 and the gearbox 4, a so-called instant gearbox, denoted with the reference numeral 3, may be provided, said instant gearbox usually having 2...4 selectable speed ranges. The power transmission system further includes a driving rear axle, which includes the differential gear 6 of the rear axle, provided with a differential lock 14 of the multi-disk clutch type. Further, in the conventional way, the rear axle includes brakes 8 and hub gears 9, e.g., of the planetary gear type. One of the rear wheels of the rear axle is denoted with the reference numeral 10 in the figure. In the differential gear 6, the power input shaft is the conical drive-wheel shaft denoted with the reference numeral 7, said shaft 7 transferring the power to the rear axle through the gear transmission in the gearbox 4. To the front axle (not shown) the power is transmitted from the gearbox 4 in the conventional way through a cardan shaft 11 and a hydraulically operated multi-disk clutch 12. With the exception of the brakes, the construction and the mode of operation of the front axle may be fully similar to the construction and the mode of operation of the rear axle. The switching on and off of the multi-disk clutch, i.e. the lock 14, of the differential gear is carried out by means of a solenoid valve 13, which is operated by the pressure provided by the hydraulic pump 5.

The differential-lock control system in accordance with the invention includes a system of detectors, by whose means the control system can judge whether a differential lock is needed or not in each particular situation. First, the detector system includes a detector 15 for the speed of rotation of the gearbox, which measures the speed of the gearbox so that the gearbox speed range does not affect the measurement result. In the arrangement shown in the figure, said detector for the speed of rotation of the gearbox is arranged to measure the speed of rotation of the conical drive-wheel shaft 7. As the measurement result given by the detector 15 for the speed of rotation of the gearbox, the theoretical speed of the tractor is obtained. Secondly, the control system in accordance with the invention includes a speed detector 16, which measures the speed of rotation of one of the rear wheels 10. Said detector for the speed of rotation of one of the rear wheels is connected to the transmission so that it measures the speed of the rear wheel 10 irrespective of whether the differential lock 14 is engaged or not.

Further, the control system includes a ground-speed detector 17, e.g., based on microwave technology, which measures the factual travel speed of the tractor. Further, the control system includes a braking detector 20, which is connected to the brake pedal and reports when the brakes of the tractor are applied, as well as a driving-clutch detector 21 connected to the clutch pedal, which reports when the driving clutch is pressed. Further, the control system includes a steering-angle detector 23, which measures the turning angle of the front wheels and which reports when the front wheels have been turned, e.g., by more than 10°. To illustrate this, the steering wheel is also denoted in the figure with the reference numeral 22.

The control system further includes a central unit 18 of the microprocessor type, to which all of the above detectors have been connected so that they transmit the signals corresponding to their measurement data to the central unit 18. The solenoid valve 13 for the differential lock 14, mentioned above, is also connected to the central unit 18 so that the central unit 18 gives the solenoid valve 13 the necessary command signals for switching the differential lock 14 on or off. The central unit 18 is also provided with a device by whose means of the operator of the tractor can program the desired operation parameters for the control system.

The control system in accordance with the invention also includes an operation switch device denoted with the reference numeral 19, which device includes operation switches for the driver, by whose means the mode of operation of the control system can be chosen. By means of one of the switches in the operation switch device 19, it can be selected whether the driver wishes to use a fully manually controlled differential lock or, on the other hand, a fully automatically engaged differential lock. Manual control or positive control is needed when, out of some reason, it is desirable to force the differential lock 14 on or off irrespective of the automation. By means of the other switch, i.e. the manual-operation switch, it is just selected whether the differential lock is switched on or off. Thus, the switches in the operation switch device 19 operate so that, by means of one of the switches, manual operation or automatic operation of the differential lock is selected, and by means of the other switch, with manual operation only, the differential lock 14 is switched on or off.

The automatic operation of the control system in accordance with the invention takes place as follows:

The tractor operator first programs a so-called operation parameter into the central unit 18, which parameter acts as the criterion of automatic switching on/off of the differential lock 14. Said operation parameter is a simple percentage, which states the difference in speed between one rear wheel 10 and the speed provided by the gearbox 4 as a percentage. When both of the rear wheels revolve at the same speed in the same direction, said parameter is 0, and when only one of the rear wheels 10 revolves and the tractor does not move, said parameter is either + 100 or -100, depending on whether the detector 16 of rotation speed measures the speed of the stationary wheel or of the revolving wheel. The differential lock is needed when, during operation of the tractor, said percentage is 10... 100, irrespective of the sign and depending on the driving situation.

When the automation of the control system has been switched on, the central unit 18 starts calculating the corresponding factual value and constantly compares it with the desired reading. The factual value needed by the central unit is obtained by means of the measurement data given by the rotation-speed detectors 15 and 16 from the following formula:

$$P = \frac{\text{gearbox speed - rear-wheel speed}}{\text{gearbox speed}} \cdot 100 \ \%$$

The factual value of the parameter P, calculated by the central unit 18, tells when the differential lock 14 must be switched on. In the following, the control algorithm present in the central unit 18 will be described with the aid of an example:

When driving is started with the tractor and when the automatic control has been switched on by means of the operation switch device 19, the control system has switched off the differential lock 14.

Hereupon, the differential lock 14 is switched on as soon as the factual value of the parameter P exceeds the programmed operation parameter, i.e. if the speed of one of the rear wheels 10 is to a certain extent lower or higher than the speed of the gearbox 4 indicated by the detector 15 for the rotation speed of the gearbox, and if the ground speed indicated by the ground-speed detector 17 is not higher than the pre-programmed limit value of speed, and if the ground speed is not the same as the speed of the gearbox 4, if the steering angle of the front wheels indicated by the steering-angle detector 23 is, at the same time, smaller than 10°, and if the brake pedal has not been pressed. When all of these conditions are met at the same time, the differential lock 14 is switched on in compliance with the control command given by the central unit 18.

In this case, the sign of the calculated operation parameter P is of no importance, for the speed indicated by the detector 16 for the speed of rotation of one of the rear wheels may be lower or higher than the speed of the gearbox 4. Thus, the control system immediately notices if the mutual difference in speed of rotation between the rear wheels becomes excessively high and switches on the differential lock 14 to assist the transmission. The information provided by the ground-speed detector 17 concerning the ground speed is needed in order that it could be found whether the tractor is operating on the road or on a field. If the speed is higher than 12 km per hour, the tractor usually runs on the road and, out of reasons of safety, in such a case, the differential lock 14 is not switched on at all. Also, if the steering angle is larger than 10° during turning, then the lock is not switched on either, to prevent strains on the transmission and wear of the tires. During driving in a curve, the mutual difference in speed between the rear wheels may, however, become excessively high even if the steering angle were not exceeded. This is why the ground speed and the gearbox speed are also compared with each other and, if these speeds are equally high, the differential lock 14 is not switched on, because the progress is also optimal without a lock. Nor is the lock switched on during braking, to prevent strains on the transmission.

The control system is arranged to switch off the differential lock 14 when the ground speed that is obtained as the measurement result of the ground-speed detector 17 is equal to the gearbox speed for a certain period of time or when the ground speed is excessively high, i.e. higher than the preset value, or when the gearbox speed is 0, or when the brake or the driving clutch pedal is pressed, or if the steering angle is larger than 10°. In farm tractors, e.g., the value of 12 km per hour can be used as a suitable preset value for the ground speed. After this, the differential lock 14 remains disengaged until the conditions of switching on described above are met again.

By means of the setting of the conditions for the switching-off of the differential lock 14, an operation is achieved in which the differential lock 14 is switched off as soon as the theoretical speed and the factual ground speed of the tractor are equal, i.e. in a situation in which the wheels of the tractor no longer slip. The lock is also switched off when the travel speed becomes excessively high or when the steering angle is higher than 10°. The lock is also switched off when braking is performed with the tractor and when the clutch pedal is pressed. By means of the driving-clutch pedal, it is ensured that in a situation of danger the differential lock 14 is always disengaged, for, in situations of danger, the first instinctive reaction of the driver is, as a rule, always pressing of the clutch pedal. Also, when the tractor stops, i.e. when the theoretical speed of the gearbox is 0 km per hour, the differential lock 14 is switched off.

Above, the invention has been described by way of example with reference to the figure in the accompanying drawing. The invention is, however, not confined to the exemplifying embodiment illustrated in the figure alone, but different embodiments of the invention may show variation within the scope of the inventive idea defined in the accompanying claims.

## Claims

1. Method for switching on/off of the differential lock of a tractor or of a corresponding working machine in a tractor or equivalent in which at least the rear axle is arranged as a driving axle and is provided with a differential lock (14) installed in the differential gear (6), said driving axle being operated by the engine (1) of the tractor or equivalent through a driving clutch (2) and a gearbox (4), **characterized** in that, in the method, the mutual difference in the speeds of rotation of the rear wheels (10) of the tractor or equivalent, the factual travel speed of the tractor, and the turning angle of the steering wheels are measured constantly, and the measured values are compared with the values programmed in advance in a microprocessor-type central unit included in the control system, whereby, when the measured values are in a certain relationship to the pre-programmed values, the differential lock (14) is switched on/off automatically.

2. Method as claimed in claim 1, **characterized** in that the mutual difference in speed between the driving wheels (10) is determined by measuring the speed of one of the driving wheels (10) and the speed of the gearbox (4) and by comparing said speeds with each other in the central unit (18) of the control system.

3. Method as claimed in claim 1 or 2, **characterized** in that in the central unit (18) of the control system, the relative slippage of the driving wheels (10) is calculated both from the pre-programmed speed values and from the measured speed values, these relative slippages are compared with each other, and the measured travel speed is compared with the pre-programmed value, the differential lock (14) being switched on when the measured slippage is higher than the pre-programmed slippage and if the measured travel speed is lower than the pre-programmed value.

4. Method as claimed in claim 3, **characterized** in that the differential lock (14) is switched off if the factual travel speed and the measured rear-axle speed are equal for a predetermined period of time.

5. Method as claimed in claim 3, **characterized** in that the differential lock (14) is switched on only if the measured turning angle of the steering wheels does not exceed a predetermined value.

6. Method as claimed in claim 3 or 4, **characterized** in that, in the method, it is additionally sensed whether the brake pedal has been pressed and the driving clutch (2) disengaged, in which case the differential lock (14) is switched on only provided that, at the time concerned, braking does not take place and the driving clutch (2) is engaged at the same time.

7. Control system for switching on/off of the differential lock of a tractor or of a corresponding working machine in a tractor or equivalent in which at least the rear axle is a driving axle and provided with a differential lock (14) installed in connection with the differential gear (6), said driving axle being operated by the engine (1) of the tractor through a driving clutch (2) and a gearbox (4), **characterized** in that the control system is provided with a programmable central unit (18) as well as with detectors (15,16,17,23) which measure the speeds of at least one driving wheel (10) and the gearbox (4) as well as the factual travel speed and the turning angle of the steering wheels, said detectors being arranged to feed the signals corresponding to the measured values to the central unit (18) to compare said values with the pre-programmed values, and the central unit (18) being arranged to switch on/off the differential lock when the measured values are in a predetermined relationship to the programmed values.

8. Control system as claimed in claim 7, **characterized** in that the control system is arranged to switch on the differential lock (14) when the relative slippage of the wheels, calculated from the speeds of rotation of the driving wheel (10) and of the gearbox (4), exceeds a predetermined value and when the factual travel speed and the turning angle of the steering wheels are lower than predetermined values.

9. Control system as claimed in claim 8, **characterized** in that the control system is additionally provided with detectors (20,21) for monitoring of the application of the brake pedal and of the driving clutch (2), the control system being arranged to switch on the differential lock (14) only when no braking takes place at the time concerned while the driving clutch (2) is engaged at the same time.

## EUROPEAN SEARCH REPORT

**European Patent Office**

Application Number

EP    91 85 0120

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | FR-A-2638401 (PEUGEOT & CITROEN)<br>* page 4, lines 10 - 24 *<br>* page 7, lines 14 - 29 *<br>* page 8, lines 13 - 22 *<br>* page 9, lines 8 - 16 *<br>* claims 1-4, 8, 15; figures *<br>--- | 1, 2,<br>5-9 | B60K23/04 |
| A | FR-A-2261895 (VALMET OY)<br>* page 5, line 30 - page 6, line 9; claims 5, 6<br>*<br>--- | 1, 5, 7 | |
| A | DE-A-3440492 (XAVER FANDT & CO)<br>* the whole document *<br>--- | 1, 5, 7 | |
| A | GB-A-2130313 (ROCKWELL INTERNATIONAL CORP.)<br>* abstract; claim 1 *<br>--- | 6, 9 | |
| A | PATENT ABSTRACTS OF JAPAN<br>vol. 12, no. 18 (M-660)(2865) 20 January 1988,<br>& JP-A-62 178434 (MAZDA MOTOR CORP.) 05 August<br>1987,<br>* the whole document *<br>--- | 2 | TECHNICAL FIELDS SEARCHED (Int. Cl.5 ) |
| A | EP-A-213654 (ALFA ROMEO AUTO S.P.A.)<br>* page 9; claims 1, 2 *<br>----- | 9 | B60K<br>F16H |

The present search report has been drawn up for all claims

| Place of search | Date of completion of the search | Examiner |
|---|---|---|
| THE HAGUE | 13 AUGUST 1991 | TOPP-BORN S. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................
& : member of the same patent family, corresponding
document

EPO FORM 1503 03.82 (P0401)